# EUROPEAN PATENT SPECIFICATION

(11) **EP 3 876 495 B1**
(45) Date of publication and mention of the grant of the patent: **19.03.2025**
(21) Application number: 20772610.0
(22) Date of filing: 07.01.2020
(51) Int. Cl.: H04L 9/40, H04L 9/08, H04L 9/32, H04L 67/12

(54) **METHOD AND SYSTEM FOR OPERATING INTERNET OF THINGS DEVICE**
VERFAHREN UND SYSTEM ZUM BETRIEB EINER INTERNET-OF-THINGS-VORRICHTUNG
PROCÉDÉ ET SYSTÈME POUR FAIRE FONCTIONNER UN DISPOSITIF DE L'INTERNET DES OBJETS

(30) Priority: 19.03.2019 CN 201910210669
(43) Date of publication of application: 08.09.2021
(73) Proprietor: Advanced New Technologies Co., Ltd., George Town, Grand Cayman KY1-9008 (KY)
(72) Inventor: HUANG, Qi, Hangzhou, Zhejiang 311121 (CN); LIAO, Hui, Hangzhou, Zhejiang 311121 (CN)
(74) Representative: Goddar, Heinz J.
(86) International application number: PCT/CN2020/070659
(87) International publication number: WO 2020/186902

(56) References cited:
- EP-A1- 3 288 214
- CN-A- 106 850 664
- CN-A- 107 370 597
- CN-A- 107 919 962
- CN-A- 107 919 962
- CN-A- 109 150 508
- CN-A- 110 011 985
- GB-A- 2 533 348
- US-A1- 2017 118 181
- US-A1- 2017 171 204
- US-A1- 2017 222 991
- US-A1- 2019 058 586

## Description

### TECHNICAL FIELD

One or more embodiments of this specification relate to an Internet of Things device, and in particular, to a method and system for operating an Internet of Things device.

### BACKGROUND

Nowadays, Internet of Things (IoT) devices are widely used. A user may directly operate an Internet of Things device or may indirectly operate the Internet of Things device by using another device (such as a smart phone and other user equipment). In a case of remotely operating the Internet of Things device, the user usually first binds user equipment to the Internet of Things device, and then transmit an instruction to the Internet of Things device by using the user equipment. However, there may be a security risk in the method of using user equipment to operate the Internet of Things device.

Therefore, a method and system that can enhance the security during operation of the Internet of Things device are needed.
EP 3 288 214 A1 relates to authentication in ubiquitous environments.
CN 107 919 962 A relates to an internet of things device registration and authentication method.

### SUMMARY

The invention is defined in the independent claims. Advantageous modifications are set forth in the dependent claims.

To overcome defects existing in existing technologies, one or more embodiments in this specification provide technical solutions that can enhance the security during operation of an Internet of Things device.

The one or more embodiments in this specification achieve the above objective through the following technical solutions.

According to one aspect, a method for operating an Internet of Things device is disclosed and includes, after completion of a binding process with a user equipment: receiving, by user equipment, an operation instruction for an Internet of Things device from a user; identifying, by the user equipment, a biometric feature of the user; verifying, by the user equipment, an identity of the user based on the biometric feature; signing, by the user equipment if the identity of the user is verified successfully, the operation instruction by using a first user key of the user; transmitting, by the user equipment, the signed operation instruction to the Internet of Things device; verifying, by the Internet of Things device, a signature for the signed operation instruction by using a second user key of the user, where the second user key and the first user key constitute a key pair; and executing, by the Internet of Things device, the operation instruction if the signature is verified successfully.

The method further includes: receiving, by the user equipment, a random number from the Internet of Things device, where the random number is generated by and stored in the Internet of Things device; transmitting, by the user equipment, both the random number and the signed operation instruction to the Internet of Things device; comparing, by the Internet of Things device after the signature is verified successfully, a random number received from the user equipment with the random number generated by the Internet of Things device; and executing, by the Internet of Things device, the operation instruction only when the random number received by the Internet of Things device from the user equipment and the random number generated by the Internet of Things device are consistent.

The method further includes: invalidating, by the Internet of Things device, the random number after the operation instruction is executed.

Preferably, the first user key is a user private key of the user, and the second user key is a user public key of the user.

Preferably, the first user key and the second user key are the same user key of the user.

Preferably, the binding, by the user equipment, the Internet of Things device further includes: identifying, by the user equipment, the biometric feature of the user; verifying, by the user equipment, the identity of the user based on the biometric feature; and transmitting, by the user equipment, the second user key to the Internet of Things device if the identity of the user is verified successfully.

Preferably, the method further includes generating, by the user equipment, the first user key and the second user key.

Preferably, the generating, by the user equipment, the first user key and the second user key further includes: entering, by the user equipment, the biometric feature of the user, and generating, by the user equipment, the first user key and the second user key for the user after the biometric feature is entered.

Preferably, the first user key and the second user key are stored in a secure environment of the user equipment, where the secure environment is a trusted execution environment (TEE) or a hardware secure element (SE).

According to another aspect, a system is disclosed and includes: user equipment and an Internet of Things device, where the system is configured to perform the foregoing method.

Preferably, the system further includes a router, and the user equipment communicates with the Internet of Things by using the router.

In another aspect, a computer-readable storage medium storing instructions is disclosed, the instructions, when executed by a computer device, causing the computer device to perform the foregoing method.

Compared with the existing technologies, in the one or more embodiments in this specification, the security during operation of the Internet of Things device can be enhanced.

### BRIEF DESCRIPTION OF THE DRAWINGS

The foregoing content of this application and the following implementations are better understood when read with reference to accompanying drawings. It is to be noted that, the accompanying drawings are merely used as examples of the inventions to be protected. The same reference numerals in the accompanying drawings represent the same or similar components.
FIG. 1 is a schematic diagram of a system according to an embodiment of this specification;
FIG. 2 is a schematic diagram of a process of entering a biometric feature according to an embodiment of this specification;
FIG. 3 is a schematic diagram of a process of binding an Internet of Things device according to an embodiment of this specification;
FIG. 4 is a schematic diagram of a process of operating an Internet of Things device according to an embodiment of this specification;
FIG. 5 is a schematic diagram of a method for operating an Internet of Things device according to an embodiment of this specification;
FIG. 6 is a schematic diagram of another method for operating an Internet of Things device according to an embodiment of this specification; and
FIG. 7 is a schematic diagram of another method for operating an Internet of Things device according to an embodiment of this specification.

### DETAILED DESCRIPTION

The content of the following implementations is sufficient to enable a person skilled in the art to understand technical content of one or more embodiments in this specification and implement the technical content accordingly. According to the specification, claims, and accompanying drawings disclosed in this specification, a person skilled in the art can understand a related purpose and advantages of the one or more embodiments in this specification easily.

Biometric feature identification technology is a technology that performs identity authentication by using human biometric features. Compared with conventional identity authentication methods including identity identification items (e.g., a key, a certificate, and an ATM card, etc.) and identity identification knowledge (e.g., a user name and a password), the biometric feature identification technology is more secure, confidential and convenient. The biometric feature identification technology has advantages of not easy to forget, good anti-counterfeit and anti-theft performance, being convenient, and being available anytime and anywhere.

Various types of biometric feature identification technologies have emerged nowadays, such as fingerprint identification, palm print (hand geometry) identification, iris identification, face identification, voice identification, signature identification, and gene identification. In the following, fingerprints are usually used as an example, but it should be understood that other biometric features besides fingerprints may be used.

### System overview

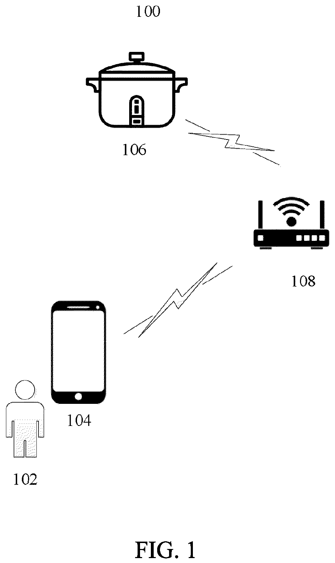

FIG. 1 shows a schematic diagram of a system 100 according to an embodiment of this specification. As shown in FIG. 1, the system 100 includes user equipment 104 and an Internet of Things device 106. The user equipment 104 is used by a user 102.

The user equipment 104 is preferably a mobile device such as a mobile communication device (e.g., a smart phone, etc.), a tablet computer, a notebook computer, or a personal digital assistant (PDA). However, the user equipment 104 may alternatively be another device such as a desktop computer, and a set-top box.

Generally, the user equipment 104 includes a biometric feature identification capability. For example, the user equipment 104 may include a fingerprint scanner that may scan a fingerprint of the user 102 and process scanned data to identify the fingerprint of the user 102 and thus authenticate the user.

The Internet of Things device 106 is usually an object connected by the Internet of Things, and it usually has a network connection capability to interact with another device by using the Internet of Things. The Internet of Things device 106 is bound to the user equipment 104, so that the user equipment 104 may control the Internet of Things device 106 or may perform other interactions with the Internet of Things device 106.

Examples of the Internet of Things device 106 include but are not limited to an industrial device and a household device, for example, an industrial robot, a smart medical device, an automobile, a door lock, a rice cooker, and a refrigerator. In the following examples, a smart rice cooker is used as an example for description, but it should be understood that the embodiments of this specification are not limited to a specific Internet of Things device.

In some examples, an application that interacts with the Internet of Things device 106 may be installed on the user equipment 104. The application may be an application for one or more Internet of Things devices. For example, the application may be a smart rice cooker application dedicated to a smart rice cooker. Alternatively, the application may be a general application for an Internet of Things device of a certain brand. Alternatively, the application may be a system-level Internet of Things device application. In the following examples, a smart rice cooker application is used as an example for description, but it should be understood that the embodiments of this specification are not limited to a smart rice cooker application.

As shown in FIG. 1, in some examples, the system 100 may further include a router 108. A network connection may be established between the user equipment 104 and the Internet of Things device 106 by using the router 108, so that the user equipment 104 is allowed to communicate with the Internet of Things device 106 by using a network. Preferably, the network is a wireless network.

Alternatively, the system 100 may not include the router 108, and the user equipment 104 and the Internet of Things device 106 may be connected in other ways, for example, connected through infrared, Bluetooth, Zigbee, and the like.

### Biometric feature entry:

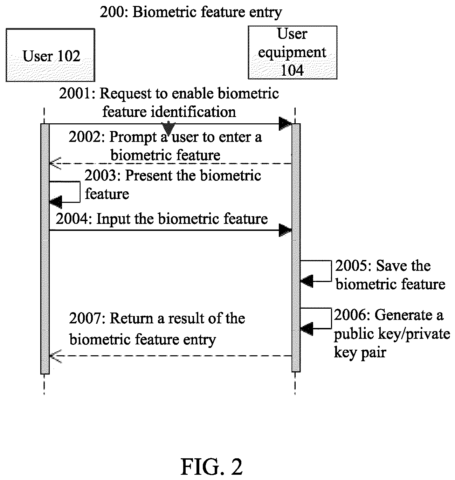

FIG. 2 is a schematic diagram of a process 200 of entering a biometric feature according to an embodiment of this specification and involves a user 102 and user equipment 104.

To perform identity authentication by using a biometric feature later, a biometric feature of the user 102 usually needs to be entered first, so as to associate the biometric feature with the user 102.

As shown in operation 2001 in FIG. 2, the user 102 may request the user equipment 104 to enable biometric feature identification. For example, the user 102 may click/tap a control on the smart rice cooker application in the user equipment 104 to request to enable the biometric feature identification. For example, the user 102 may click/tap a button "use fingerprint identification" on the user equipment 104 to transmit a request for enabling the biometric feature identification to the user equipment 104. The user equipment may prompt the user to enable the biometric feature identification when the user opens or uses the smart rice cooker application.

In some embodiments, it is possible that the user 102 has not entered the biometric feature on the user equipment 104 yet. In this case, the following process of entering a biometric feature may be performed.

As shown in operation 2002 in FIG. 2, the user equipment 104 may prompt the user to present the biometric feature. For example, the user equipment may prompt the user 102 to put a finger on a fingerprint scanner. In some cases, this operation may be skipped. For example, when a user feature is an iris, the iris of the user may be directly scanned without prompting the user.

Subsequently, as shown in operation 2003 in FIG. 2, the user 102 may present the biometric feature according to the prompt. For example, the user 102 may put the finger on the fingerprint scanner of the user equipment 104.

Subsequently, as shown in operation 2004 in FIG. 2, the biometric feature of the user 102 may be transmitted to the user equipment 104. For example, the fingerprint scanner of the user equipment 104 may read the biometric feature of the user 102.

Subsequently, as shown in operation 2005 in FIG. 2, the user equipment 104 may store the biometric feature of the user 102.

During the scan, the user 102 may further be prompted to move the finger, so that complete fingerprint data is obtained.

In a later identity authentication process, a fingerprint of a to-be-authenticated user may be scanned to extract a fingerprint feature and compare the extracted fingerprint feature with a stored user fingerprint feature, so as to determine whether the two fingerprints match and further authenticate an identity of the user.

In some other embodiments, the user 102 may have entered the biometric feature on the user equipment 104. For example, the user 102 may have previously entered the fingerprint or the like on the user equipment 104. In this case, there is no need to enter the biometric feature again, and the entered biometric feature is used.

In some other examples, regardless of whether there is an entered biometric feature on the user equipment 104, a dedicated biometric feature may be entered for a specific Internet of Things device. For example, a biometric feature dedicated to the smart rice cooker may be entered by using the smart rice cooker application. Security may be further enhanced by using the biometric feature dedicated to the specific Internet of Things device.

Different from existing technologies, in this embodiment of this specification, as shown in operation 2006 in FIG. 2, the user equipment 104 may further generate a public key/private key pair for the user 102. Preferably, as described in detail below, a user public key may be stored in the Internet of Things device 106 later, and a user private key may be stored on the user equipment 104, so that the user public key in the Internet of Things device 106 may be used for verifying the private key on the user equipment 104.

Alternatively, a symmetric encryption solution may be adopted. For example, the user equipment 104 may generate a single user key, and the single user key may be stored on the user equipment 104 and stored on the Internet of Things device 106 later, so that the user key on the Internet of Things device 106 may be used for verifying the user key on the user equipment 104.

Preferably, the user equipment 104 may include a secure environment, and a private key (and/or a biometric feature) of the user 102 may be stored in the secure environment. The secure environment may be a software-level secure environment or a hardware-level secure environment or a combination thereof.

For example, the user equipment 104 may include a Trusted Execution Environment (TEE). The TEE is a secure environment implemented by an independent operating system that is built in the user equipment 104 and isolated from a main operating system of the user equipment 104, and the TEE may be used for ensuring the security of operations such as key storage, calculation, and biometric feature identification. In this case, the private key of the user 102 may be stored in the TEE.

In another example, the user equipment 104 may include a Secure Element (SE), and the SE is usually provided in the form of a chip. To prevent external malicious parser attacks and protect data security, a chip as an SE usually has an encryption/decryption logic circuit. In this case, the private key of the user 102 may be stored in the SE.

By using the secure environment, the embodiments of this specification may further enhance the protection for the public key/private key pair.

Subsequently, as shown in operation 2007 in FIG. 2, a result of the biometric feature entry may be returned to the user 102. For example, the user 102 may be notified that the entry of the user biometric feature is completed. In addition, preferably, the user 102 may also be notified that the generation of the public key/private key pair is completed.

### Binding of Internet of Things device:

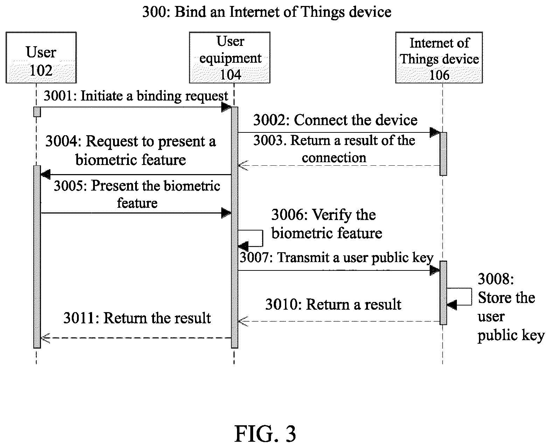

Before the user 102 is allowed to operate the Internet of Things device 106, the Internet of Things device 106 is generally bound to the user 102 first. FIG. 3 is a schematic diagram of a process 300 of binding an Internet of Things device according to an embodiment of this specification;

In an embodiment, as shown in operation 3001 in FIG. 3, a user 102 may initiate a binding request to user equipment 104. For example, the user 102 may click/tap a control in a smart rice cooker application on the user equipment 104 to select a to-be-bound smart rice cooker. For example, the smart rice cooker may be found by searching for devices in a local area network by using the user equipment.

The user equipment 104 receives the binding request from the user 102. As shown in operation 3002 in FIG. 3, the user equipment 104 may attempt to connect to an Internet of Things device 106 based on the binding request. The connection may be implemented by using the router 108 shown in FIG. 1 or implemented in another manner.

Optionally, as shown in operation 3003 in FIG. 3, after the connection is established successfully, the Internet of Things device 106 may return a connection result to the user equipment 104. In addition, the user equipment may also notify the user that the connection is successful.

In this embodiment of this specification, a biometric feature authentication process may be performed on the user equipment 104. For example, as shown in operation 3004 in FIG. 3, the user equipment 104 may request the user 102 to present a biometric feature. For example, it may be displayed in the smart rice cooker application in the user equipment 104: "Please scan a fingerprint!"

As shown in operation 3005 in FIG. 3, the user 102 may present the biometric feature to the user equipment 104 in response to the request. For example, the user 102 may put a finger on a fingerprint scanner of the user equipment 104.

Subsequently, as shown in operation 3006 in FIG. 3, the user equipment 104 may receive and verify the biometric feature presented by the user 102. For example, the user equipment 104 may scan the fingerprint of the user by using the fingerprint scanner, and the user equipment 104 may extract a scanned fingerprint feature of the user fingerprint and compare the extracted fingerprint feature with a stored user fingerprint feature, so as to determine whether the two fingerprint features match and further authenticate an identity of the user.

In a case that the fingerprint feature provided by the user matches the stored user fingerprint feature, the identity of the user is successfully authenticated. In a case that the fingerprint feature provided by the user does not match the stored user fingerprint feature, the user may be prompted that the fingerprints do not match, and the biometric feature may be re-verified or the binding process may end (for example, the user may be prompted that the binding is unsuccessful).

As shown in operation 3007 in FIG. 3, after the user fingerprint is verified successfully, the user equipment 104 may transmit, by using, for example, the connection established in the previous operation 3002, the user public key associated with the authenticated user 102 to the Internet of Things device 106.

After receiving the user public key associated with the user 102, as shown in operation 3008 in FIG. 3, the Internet of Things device 106 may store the user public key, for example, in a memory of the Internet of Things device 106. Similarly, to further enhance the security, the Internet of Things device may store the user public key in a secure environment, for example, a TEE or an SE.

Subsequently, as shown in operation 3010 in FIG. 3, the Internet of Things device 106 may return a result to the user equipment 104, for example, it is acknowledged that the user public key is stored successfully.

Subsequently, as shown in operation 3011 in FIG. 3, the user equipment 104 may return a result to the user 102 after receiving an acknowledgment from the Internet of Things device 106. For example, a prompt that the binding process is completed may be displayed to the user by using the smart rice cooker application.

### Operation of Internet of Things device:

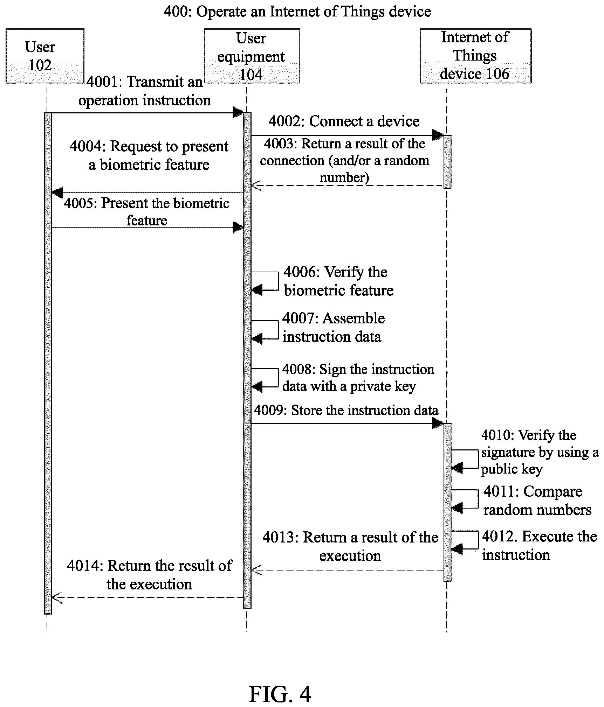

FIG. 4 is a schematic diagram of a process 400 of operating an Internet of Things device according to an embodiment of this specification;

In an embodiment, when a user 102 wants to operate an Internet of Things device 106, as shown in operation 4001 in FIG. 4, the user 102 initiates an operation instruction by using user equipment 104. The operation may be, for example, management for the Internet of Things device 106 or other interactions with the Internet of Things device 106.

For example, the user 102 may tap/click a corresponding control in a smart rice cooker application in the user equipment to operate the Internet of Things device. For example, in the smart rice cooker application, after selecting parameters such as "rice type" and "taste", the user may tap/click a "start" button on the smart rice cooker application, so as to transmit an instruction for starting cooking to a smart rice cooker.

The user equipment 104 receives the operation instruction from the user 102. As shown in operation 4002 in FIG. 4, the user equipment 104 may attempt to connect to the Internet of Things device 106 based on the operation instruction. Similarly, the connection may be implemented by using the router 108 shown in FIG. 1 or implemented in another manner. The connection may alternatively be an automatic connection after the user opens the smart rice cooker application, and then the user may transmit the operation instruction by using the application.

Optionally, as shown in operation 4003 in FIG. 4, after the connection is established successfully, the Internet of Things device 106 may return a connection result to the user equipment 104.

As shown operation 4003 in FIG. 4, after the connection is established successfully, the Internet of Things device 106 returns a random number to the user equipment 104. In a case that the connection is established automatically, after the smart rice cooker application is opened, the Internet of Things device 106 may return the random number to the user equipment 104 after the user transmits the operation instruction. The random number is generated and stored by the Internet of Things device 106. The random number is beused for ensuring that the operation instruction is executed only once, so as to enhance the security of the Internet of Things device 106. It can be understood that, the random number may be generated by using any random number generation solution known in the art.

For example, as shown in operation 4004 in FIG. 4, the user equipment 104 may request the user 102 to present a biometric feature. For example, it may be displayed in the smart rice cooker application in the user equipment 104: "Please scan a fingerprint!"

As shown in operation 4005 in FIG. 4, the user 102 may present the biometric feature to the user equipment 104 in response to the request. For example, the user 102 may put a finger on a fingerprint scanner of the user equipment 104.

Subsequently, as shown in operation 4006 in FIG. 4, the user equipment 104 receives and verifies the biometric feature presented by the user 102. For example, the user equipment 104 may scan the fingerprint of the user by using the fingerprint scanner, and the user equipment 104 may extract a fingerprint feature and compare the extracted fingerprint feature with a stored user fingerprint feature, so as to determine whether the two fingerprint features match and further authenticate an identity of the user.

In a case that the fingerprint feature provided by the user matches the stored user fingerprint feature, the identity of the user is successfully authenticated. In a case that the fingerprint feature provided by the user does not match the stored user fingerprint feature, the user may be prompted that the fingerprints do not match, and the biometric feature may be re-verified or the operation process may end.

After the user fingerprint is verified successfully, as shown in operation 4007 in FIG. 4, the user equipment 104 assembles instruction data. Based on the instruction (for example, an instruction of starting cooking) transmitted by using the user equipment 104 by the user 102 and the random number returned by the Internet of Things device 106 in operation 4003, the user equipment 104 generates instruction data used for the Internet of Things device 106.

Subsequently, as shown in operation 4008 in FIG. 4, the user equipment 104 signs the instruction data by using a stored user private key. The method of signing data by using a private key is known to those skilled in the art, and details are not repeated herein. Similarly, it should be understood that, in other embodiments, the user equipment 104 may sign the instruction data by using a stored user public key/user private key.

Subsequently, as shown in operation 4009 in FIG. 4, the user equipment 104 transmits the signed instruction data and the random number to the Internet of Things device 106 by using, for example, the connection established in operation 4002.

The Internet of Things device 106 receives the signed instruction data from the user equipment 104. Subsequently, as shown in operation 4010 in FIG. 4, the Internet of Things device 106 verifies, by using the user public key stored in the Internet of Things device 106, the instruction data that is signed by using the user private key.

If the signed instruction data cannot be verified successfully, it indicates that the instruction data is not signed by using a valid user private key. Therefore, the Internet of Things device 106 refuses to execute the user instruction (for example, a cooking instruction) and returns an error report to the user equipment 104. In this case, the user equipment 104 may display information indicating a signature error to the user 102.

If the signed instruction data is verified successfully, it indicates that the instruction data is signed by using valid data. In this case, the Internet of Things device 106 performs subsequent steps.

Subsequently, the Internet of Things device 106 compares the random number with the random number that is previously generated and stored. If a random number included in the instruction data is the same as the stored random number, as shown in operation 4012 in FIG. 4, the Internet of Things device 106 executes an instruction in the instruction data. For example, the Internet of Things device 106 may extract the instruction in the instruction data and execute the instruction.

The Internet of Things device 106 invalidates may the random number (for example, by deleting the random number). If the random number included in the instruction data is different from the stored random number or the instruction data does not include the random number, the Internet of Things device 106 may not execute the instruction in the instruction data and may return an error report to the user equipment.

It can be understood that, the step of comparing the random numbers may be performed before the step of verification using the private key.

After executing the instructions in the instruction data, as shown in operation 4013 in FIG. 4, the Internet of Things device 106 may return a result of the execution to the user equipment. For example, the Internet of Things device 106 may return, to the user equipment 104, an acknowledgment that the cooking instruction has been executed successfully.

Subsequently, as shown in operation 4014 in FIG. 4, the user equipment 104 may return the result of the execution to the user 102. For example, the user equipment 104 may display information "the cooking is started" to the user 102 in the smart rice cooker application.

It can be seen that, in this application, an identity of a user is verified by using a biometric feature, thereby avoiding risks related to stealing of a user name or a password and further improving the security of a system.

It should be understood that the embodiments of this specification have many variations.

For example, in one variation, the public key/private key pair is not generated during the entry of the user biometric feature but generated during the binding of the Internet of Things device. For example, step 2006 in FIG. 2 may be performed after step 3006 in FIG. 3.

In another non-claimed variation, not all operation instructions need to be verified by using a user biometric feature. For example, in some embodiments, after receiving the operation instruction, the user equipment 104 may first determine a secure level of the operation instruction, and require, only when the secure level is relatively high, the user to present a biometric feature for verification.

In addition, although the foregoing descriptions show examples of an asymmetric encryption solution (that is public key/private key pair), it should be understood that, in other examples, a symmetric encryption solution may also be adopted, and both the user public key and the user private key may be replaced with the same user key.

### Exemplary method:

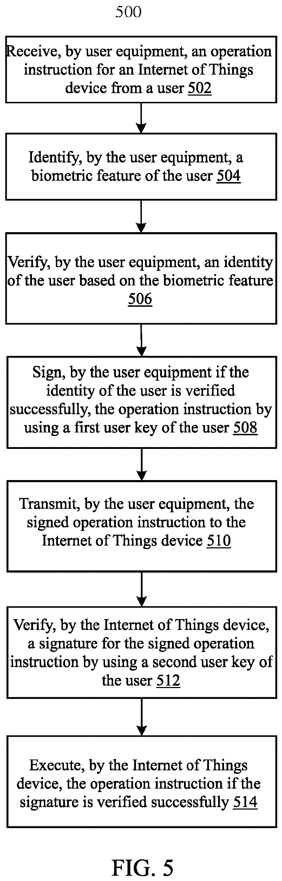

FIG. 5 is a schematic diagram of a method 500 for operating an Internet of Things device according to an embodiment of this specification.

The method 500 includes step 502, receiving, by user equipment, an operation instruction for an Internet of Things device from a user. For example, the user may tap/click a control on an application interface of the Internet of Things device on the user equipment to transmit the operation instruction, for example, an instruction of starting cooking for a rice cooker.

The method 500 further includes step 504, identifying, by the user equipment, a biometric feature of the user. Specifically, as described above, the user equipment may request the user to present the biometric feature and then receive the biometric feature presented by the user.

The method 500 further includes step 506, verifying, by the user equipment, an identity of the user based on the biometric feature. For example, the user equipment may compare the biometric feature presented by the user with a biometric feature of a user entered previously, to verify whether the user is a user associated with the Internet of Things device.

The method 500 includes : step 508, signing, by the user equipment if the identity of the user is verified successfully, the operation instruction by using a first user key of the user. For example, the first user key and the second user key may be generated previously by the user equipment for a user whose biometric feature has been entered. Preferably, the first user key is a user private key of the user, and the second user key is a user public key of the user. Alternatively, the first user key and the second user key are the same user key of the user.

The first user key and the second user key may be generated by the user equipment during the entry of the biometric feature or during the binding of the Internet of Things device. The generating, by the user equipment, the first user key and the second user key further includes: entering, by the user equipment, the biometric feature of the user, and generating, by the user equipment, the first user key and the second user key for the user after the biometric feature is entered.

Preferably, the first user key and the second user key are stored in a secure environment of the user equipment, where the secure environment is a TEE or a hardware SE.

The method 500 further includes: step 510, transmitting, by the user equipment, the signed operation instruction to the Internet of Things device. Both a random number and the signed operation instruction received from the Internet of Things device are transmitted to the Internet of Things device by the user equipment.

The method 500 further includes: step 512, verifying, by the Internet of Things device, a signature for the signed operation instruction by using the second user key of the user, where the second user key and the first user key constitute a key pair.

The method 500 further includes: step 514, executing, by the Internet of Things device, the operation instruction if the signature is verified successfully. The Internet of Things device further compares a random number received from the user equipment with a random number generated by the Internet of Things device, and executes the operation instruction only when the random number received by the Internet of Things device from the user equipment and the random number generated by the Internet of Things device are consistent. After executing the operation instruction, the Internet of Things device invalidates the random number.

Before the Internet of Things device is operated, the Internet of Things device is bound by the user equipment. The binding may be performed through the following operations: identifying, by the user equipment, the biometric feature of the user; verifying, by the user equipment, the identity of the user based on the biometric feature; and transmitting, by the user equipment, the second user key to the Internet of Things device if the identity of the user is verified successfully.

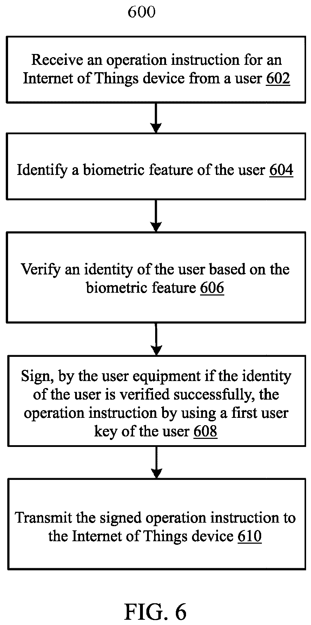

FIG. 6 is a schematic diagram of another method 600 for operating an Internet of Things device according to a non-claimed embodiment of this specification. The method 600 may be executed by user equipment.

The method 600 may include: step 602, receiving an operation instruction for an Internet of Things device from a user.

The method 600 may further include: step 604, identifying a biometric feature of the user.

The method 600 may include: step 606, verifying an identity of the user based on the biometric feature.

The method 600 may include: step 608, signing, if the identity of the user is verified successfully, the operation instruction by using a first user key of the user.

The method 600 may further include: step 610, transmitting the signed operation instruction to the Internet of Things device. The signature is used by the Internet of Things device to authenticate the identity of the user by using a second user key, and the second user key and the first user key constitute a key pair.

Reference may be made to descriptions for FIG. 5 for specific operations of related steps.

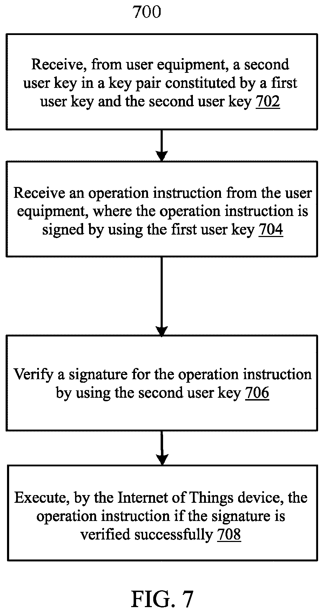

FIG. 7 is a schematic diagram of another method 700 for operating an Internet of Things device according to an embodiment of this specification. The method 700 is executed by an Internet of Things device.

The method 700 may further include: step 702, receiving, from user equipment, a second user key in a key pair constituted by a first user key and the second user key.

The method 700 includes: step 704, receiving an operation instruction from the user equipment, where the operation instruction is signed by using the first user key.

The method 700 further includes: step 706, verifying a signature for the operation instruction by using the second user key.

The method 700 further includes: step 708, executing, by the Internet of Things device, the operation instruction if the signature is verified successfully.

The method 700 further includes generating a first random number and transmitting the first random number to the user equipment. Subsequently, a second random number is further received from the user equipment when the operation instruction from the user equipment is received. Subsequently, the second random number is compared with the first random number, and the operation instruction is executed only when the second random number and the first random number are consistent. The first random number is invalidated after the operation instruction is executed. For example, the first random number may be deleted.

In addition, a computer-readable storage medium storing computer executable instructions is further disclosed in this application, the computer executable instructions, when executed by a processor, causing the processor to perform the methods of the embodiments described herein.

In addition, a system is further disclosed in this application, the system including an apparatus configured to implement the methods of the embodiments described herein.

It can be understood that the methods according to one or more embodiments of this specification may be implemented by using software, hardware, or a combination of software and hardware.

It can be understood that, the embodiments of this specification are all described in a progressive manner, for same or similar parts in the embodiments, refer to these embodiments, and descriptions of each embodiment focus on a difference from other embodiments. Especially, apparatus and system embodiments are basically similar to a method embodiment, and therefore are described briefly. For related parts, reference may be made to partial descriptions in the method embodiment.

It should be understood that specific embodiments of this specification are described above. Other embodiments fall within the scope of the appended claims. In some cases, the actions or steps recorded in the claims may be performed in sequences different from those in the embodiments and an expected result may still be achieved. In addition, the processes depicted in the accompanying drawings is not necessarily performed in the specific order or successively to achieve an expected result. In some implementations, multitasking and parallel processing may be feasible or beneficial.

It should be understood that an element described in a singular form herein or displayed only one in the accompanying drawings does not represent that the element is limited to one. In addition, modules or elements described or shown as separate herein may be combined into a single module or element, and a module or an element described or shown herein as a single module or element may be split into a plurality of modules or elements.

The invention is defined by the following claims.

## Claims

1. A method (500) for operating an Internet of Things device after completion of a binding process with a user equipment, the method comprising:
receiving (502), by user equipment, an operation instruction for an Internet of Things device initiated by a user to operate the Internet of Things device;
receiving, by the user equipment, a random number from the Internet of Things device, wherein the random number is generated by and stored in the Internet of Things device;
identifying (504), by the user equipment, a biometric feature of the user;
verifying (506), by the user equipment, an identity of the user based on the biometric feature;
signing (508), by the user equipment if the identity of the user is verified successfully, the operation instruction by using a first user key of the user;
transmitting (510), by the user equipment, both the random number and the signed operation instruction to the Internet of Things device;
verifying (512), by the Internet of Things device, a signature for the signed operation instruction by using a second user key of the user, wherein the second user key and the first user key constitute a key pair;
comparing, by the Internet of Things device after the signature is verified successfully, a random number received from the user equipment with the random number generated by the Internet of Things device;
executing (514), by the Internet of Things device, the operation instruction only when the random number received by the Internet of Things device from the user equipment and the random number generated by the Internet of Things device are consistent and if the signature is verified successfully; and
invalidating, by the Internet of Things device, the random number after the operation instruction is executed, thereby ensuring that the operation instruction is executed only once.

2. The method according to claim 1, wherein the first user key is a user private key of the user, and the second user key is a user public key of the user; or
wherein the first user key and the second user key are the same user key of the user.

3. The method according to claim 1,
wherein the binding process of the Internet of Things device with the user equipment comprises:
identifying, by the user equipment, the biometric feature of the user;
verifying, by the user equipment, the identity of the user based on the biometric feature;
and
transmitting, by the user equipment, the second user key to the Internet of Things device if the identity of the user is verified successfully.

4. The method according to claim 1, wherein the first user key and the second user key are stored in a secure environment of the user equipment, and the secure environment is a trusted execution environment, TEE, or a hardware secure element, SE.

5. A system, comprising:
user equipment, having a biometric feature identification capability; and
an Internet of Things device, the system configured to perform a method according to any one of the preceding claims.

6. The system according to claim 5, wherein the system further comprises a router, and the user equipment communicates with the Internet of Things by using the router.

7. A computer-readable storage medium storing instructions, the instructions, when executed by a computer device, causing the computer device to perform the method according to any one of claims 1 to 4.

## Patentansprüche

1. Verfahren (500) zum Betreiben einer Internet-der-Dinge-Vorrichtung nach Abschluss eines Bindungsprozesses mit einem Benutzergerät, wobei das Verfahren umfasst:
Empfangen (502), durch das Benutzergerät, eines Betriebsbefehls für eine Internet-der-Dinge-Vorrichtung, der von einem Benutzer initiiert wird, um die Internet-der-Dinge-Vorrichtung zu betreiben;
Empfangen, durch das Benutzergerät, einer Zufallszahl von der Internet-der-Dinge-Vorrichtung, wobei die Zufallszahl von der Internet-der-Dinge-Vorrichtung generiert und darin gespeichert wird;
Identifizieren (504), durch das Benutzergerät, eines biometrischen Merkmals des Benutzers;
Verifizieren (506), durch das Benutzergerät, einer Identität des Benutzers basierend auf dem biometrischen Merkmal;
Signieren (508), durch das Benutzergerät, wenn die Identität des Benutzers erfolgreich verifiziert wird, des Betriebsbefehls unter Verwendung eines ersten Benutzerschlüssels des Benutzers;
Übertragen (510), durch das Benutzergerät, sowohl der Zufallszahl als auch des signierten Betriebsbefehls an die Internet-der-Dinge-Vorrichtung;
Verifizieren (512), durch die Internet-der-Dinge-Vorrichtung, einer Signatur für den signierten Betriebsbefehl unter Verwendung eines zweiten Benutzerschlüssels des Benutzers, wobei der zweite Benutzerschlüssel und der erste Benutzerschlüssel ein Schlüsselpaar bilden;
Vergleichen, durch die Internet-der-Dinge-Vorrichtung, nachdem die Signatur erfolgreich verifiziert wurde, einer von dem Benutzergerät empfangenen Zufallszahl mit der von der Internet-der-Dinge-Vorrichtung generierten Zufallszahl;
Ausführen (514), durch die Internet-der-Dinge-Vorrichtung, des Betriebsbefehls nur dann, wenn die von der Internet-der-Dinge-Vorrichtung von dem Benutzergerät empfangene Zufallszahl und die von der Internet-der-Dinge-Vorrichtung generierte Zufallszahl konsistent sind und wenn die Signatur erfolgreich verifiziert wird; und
Invalidieren, durch die Internet-der-Dinge-Vorrichtung, der Zufallszahl, nachdem der Betriebsbefehl ausgeführt wurde, wodurch sichergestellt wird, dass der Betriebsbefehl nur einmal ausgeführt wird.

2. Verfahren nach Anspruch 1, wobei der erste Benutzerschlüssel ein privater Benutzerschlüssel des Benutzers ist und der zweite Benutzerschlüssel ein öffentlicher Benutzerschlüssel des Benutzers ist; oder
wobei der erste Benutzerschlüssel und der zweite Benutzerschlüssel derselbe Benutzerschlüssel des Benutzers sind.

3. Verfahren nach Anspruch 1,
wobei der Bindungsprozess der Internet-der-Dinge-Vorrichtung mit dem Benutzergerät umfasst:
Identifizieren, durch das Benutzergerät, des biometrischen Merkmals des Benutzers;
Verifizieren, durch das Benutzergerät, der Identität des Benutzers basierend auf dem biometrischen Merkmal; und
Übertragen, durch das Benutzergerät, des zweiten Benutzerschlüssels an die Internet-der-Dinge-Vorrichtung, wenn die Identität des Benutzers erfolgreich verifiziert wird.

4. Verfahren nach Anspruch 1, wobei der erste Benutzerschlüssel und der zweite Benutzerschlüssel in einer sicheren Umgebung des Benutzergeräts gespeichert sind und die sichere Umgebung eine vertrauenswürdige Ausführungsumgebung, TEE, oder ein sicheres Hardwareelement, SE, ist.

5. System, umfassend:
ein Benutzergerät, das eine biometrische Merkmalsidentifikationsfähigkeit aufweist; und
eine Internet-der-Dinge-Vorrichtung, wobei das System eingerichtet ist, ein Verfahren nach einem der vorhergehenden Ansprüche durchzuführen.

6. System nach Anspruch 5, wobei das System ferner einen Router umfasst und das Benutzergerät mit dem Internet der Dinge unter Verwendung des Routers kommuniziert.

7. Computerlesbares Speichermedium, das Befehle speichert, wobei die Befehle, wenn sie durch eine Computervorrichtung ausgeführt werden, die Computervorrichtung veranlassen, das Verfahren nach einem der Ansprüche 1 bis 4 durchzuführen.

## Revendications

1. Procédé (500) d'opération d'un dispositif Internet des objets après l'achèvement d'un processus de liaison avec un équipement utilisateur, le procédé comprenant :
la réception (502), par un équipement utilisateur, d'une instruction d'opération pour un dispositif Internet des objets lancée par un utilisateur pour opérer le dispositif Internet des objets ;
la réception, par l'équipement utilisateur, d'un nombre aléatoire à partir du dispositif Internet des objets, dans lequel le nombre aléatoire est généré par et stocké dans le dispositif Internet des objets ;
l'identification (504), par l'équipement utilisateur, d'une caractéristique biométrique de l'utilisateur ;
la vérification (506), par l'équipement utilisateur, d'une identité de l'utilisateur sur la base de la caractéristique biométrique ;
la signature (508), par l'équipement utilisateur si l'identité de l'utilisateur est vérifiée avec succès, de l'instruction d'opération en utilisant une première clé utilisateur de l'utilisateur ;
la transmission (510), par l'équipement utilisateur, à la fois du nombre aléatoire et de l'instruction d'opération signée au dispositif Internet des objets ;
la vérification (512), par le dispositif Internet des objets, d'une signature pour l'instruction d'opération signée en utilisant une seconde clé utilisateur de l'utilisateur, dans lequel la seconde clé utilisateur et la première clé utilisateur constituent une paire de clés ;
la comparaison, par le dispositif Internet des objets après que la signature est vérifiée avec succès, d'un nombre aléatoire reçu à partir de l'équipement utilisateur avec le nombre aléatoire généré par le dispositif Internet des objets ;
l'exécution (514), par le dispositif Internet des objets, de l'instruction d'opération uniquement lorsque le nombre aléatoire reçu par le dispositif Internet des objets à partir de l'équipement utilisateur et le nombre aléatoire généré par le dispositif Internet des objets sont cohérents et si la signature est vérifiée avec succès ; et
l'invalidation, par le dispositif Internet des objets, du nombre aléatoire après que l'instruction d'opération est exécutée, garantissant ainsi que l'instruction d'opération n'est exécutée qu'une seule fois.

2. Procédé selon la revendication 1, dans lequel la première clé utilisateur est une clé privée utilisateur de l'utilisateur, et la seconde clé utilisateur est une clé publique utilisateur de l'utilisateur ; ou
dans lequel la première clé utilisateur et la seconde clé utilisateur sont la même clé utilisateur de l'utilisateur.

3. Procédé selon la revendication 1,
dans lequel le processus de liaison du dispositif Internet des objets avec l'équipement utilisateur comprend :
l'identification, par l'équipement utilisateur, de la caractéristique biométrique de l'utilisateur ;
la vérification, par l'équipement utilisateur, de l'identité de l'utilisateur sur la base de la caractéristique biométrique ; et
la transmission, par l'équipement utilisateur, de la seconde clé utilisateur au dispositif Internet des objets si l'identité de l'utilisateur est vérifiée avec succès.

4. Procédé selon la revendication 1, dans lequel la première clé utilisateur et la seconde clé utilisateur sont stockées dans un environnement sécurisé de l'équipement utilisateur, et l'environnement sécurisé est un environnement d'exécution de confiance, TEE, ou un élément sécurisé matériel, SE.

5. Système, comprenant :
un équipement utilisateur, ayant une capacité d'identification de caractéristique biométrique ; et
un dispositif Internet des objets, le système étant configuré pour effectuer un procédé selon l'une quelconque des revendications précédentes.

6. Système selon la revendication 5, dans lequel le système comprend en outre un routeur, et l'équipement utilisateur communique avec l'Internet des objets en utilisant le routeur.

7. Support de stockage lisible par ordinateur stockant des instructions, les instructions, lorsqu'elles sont exécutées par un dispositif informatique, amenant le dispositif informatique à effectuer le procédé selon l'une quelconque des revendications 1 à 4.
